# EUROPEAN PATENT SPECIFICATION

(11) **EP 4 129 660 B1**
(45) Date of publication and mention of the grant of the patent: **11.11.2026**
(21) Application number: 21781129.8
(22) Date of filing: 06.01.2021
(51) Int. Cl.: B29C 59/16, B32B 27/00, B29C 33/38, B29C 59/02, B29C 59/04, B32B 3/14, B32B 3/30, C08J 7/043, B29C 35/08, B32B 7/12, B32B 15/12, B32B 21/02, B32B 25/08, B32B 25/20, B32B 27/08, B32B 27/10, B32B 27/30, B32B 21/06, B44B 5/02, B44C 1/24

(54) **METHOD FOR MANUFACTURING TRANSFER MASTER PLATE, AND METHOD FOR MANUFACTURING DECORATIVE SHEET**
VERFAHREN ZUR HERSTELLUNG EINER TRANSFERMASTERPLATTE UND VERFAHREN ZUR HERSTELLUNG EINER DEKORFOLIE
PROCÉDÉ DE FABRICATION DE PLAQUE MAÎTRESSE DE TRANSFERT ET PROCÉDÉ DE FABRICATION DE FEUILLE DÉCORATIVE

(30) Priority: 02.04.2020 JP 2020066736
(43) Date of publication of application: 08.02.2023
(73) Proprietor: TOPPAN INC., Tokyo 110-0016 (JP)
(72) Inventor: OSHIMA Nonoka, Tokyo 110-0016 (JP)
(74) Representative: Hoffmann Eitle
(86) International application number: PCT/JP2021/000233
(87) International publication number: WO 2021/199556

(56) References cited:
- EP-B1- 3 124 240
- JP-A- 2021 024 102
- JP-A- 2021 024 102
- JP-A- H04 314 541
- JP-A- H04 314 541
- JP-A- H06 312 495
- JP-A- H06 312 495
- JP-A- H11 115 140
- JP-A- H11 115 140
- US-A1- 2013 129 980
- US-A1- 2013 129 980
- US-A1- 2018 001 696
- ROLF SCHUBERT ET AL: "VUV-induced micro-folding of acrylate-based coatings 1. Real-time methods for the determination of the micro-folding kinetics", SURFACE AND COATINGS TECHNOLOGY, ELSEVIER, NL, vol. 203, no. 13, 25 March 2009 (2009-03-25), pages 1844 - 1849, XP002723074, ISSN: 0257-8972, [retrieved on 20090115], DOI: 10.1016/J.SURFCOAT.2009.01.007
- SCUBERT, ROLF ET AL.: "VUV-induced micro-folding of acrylate-based coatings: 1. Real-time methods for the determination of the micro-folding kinetics", SURFACE AND COATINGS TECHNOLOGY, vol. 203, 2009, pages 1844 - 1849, XP002723074, DOI: https://doi.org/10.1016/j.surfcoat. 2009.01.00 7 1

## Description

### Technical Field

The present invention relates to a method for manufacturing a transfer master plate and a method for manufacturing a decorative sheet.

### Background Art

Conventionally, with respect to a decorative sheet, the matte feeling of the surface of the decorative sheet has been adjusted by adding a gloss adjuster (matting additive) to a surface protective layer of the decorative sheet from the viewpoint of design properties (see PTL 1, for example).

PTL 2 relates to a method for producing a decorative sheet of which the surface has recesses/protrusions as a result of (A) a step for filling at least a recess part of a roller intaglio plate with an ionizing radiation-curable resin, and bringing a transparent base material sheet into contact with said roller intaglio plate, and a step (B), wherein in a state in which the resin is still held between the base material sheet and the roller intaglio plate, the resin is cured by irradiating ionizing radiation, and the base material sheet is peeled from the roller intaglio plate. It is mentioned in PTL 2 that the recess/protrusion design pattern of the roller intaglio plate can be used for various matte surfaces.

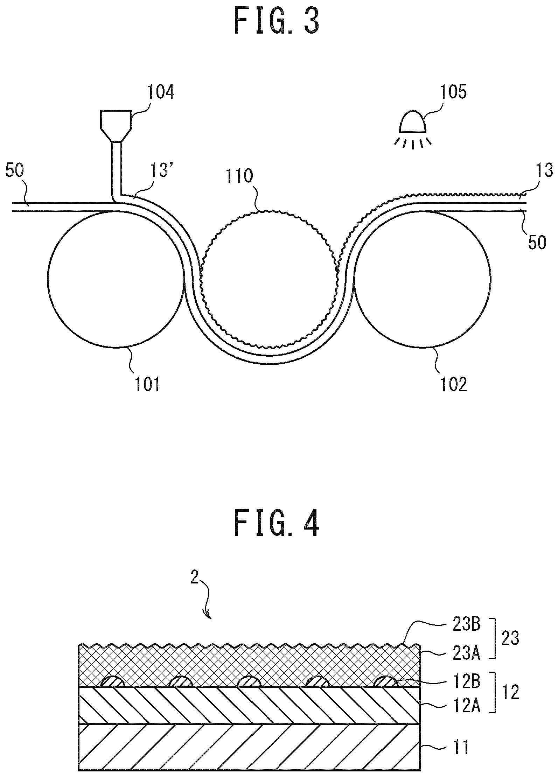

PTL 3 is concerned with a decorative sheet and a decorative plate using the same. The document shows in Fig. 4 a cross-sectional view schematically showing an example of the decorative sheet. The decorative sheet comprises a base material layer, a picture pattern layer provided on one surface of the base material layer, and a transparent surface-protecting layer and a gloss-adjusting layer provided on a surface of the picture pattern layer opposite to the base material layer. The transparent surface-protecting layer has irregular shapes on the surface of the decorative sheet.

NPTL 1 relates to a study of the photochemical micro-structuring of UV-curable polymer surfaces. Specifically, the micro-folding of acrylate-based coatings is studied using a new real-time monitoring device. In the experiments, the micro-folding process is initiated by an excimer lamp. The photochemical micro-folding is stated as resulting in acrylate-based layers showing a matt appearance with an extremely low degree of gloss.

### Citation List

### Patent Literature

PTL 1: JP 2001-129959 A
PTL 2: JP H04 314514 A
PTL 3: EP 3 124 240 B1

### Non-Patent Literature

NPTL 1: Schubert, Rolf et al.: "VUV-induced micro-folding of acrylate-based coatings: 1. Real-time methods for the determination of the micro-folding kinetics", Surface and Coatings Technology, vol. 203, 2009, pages 1844-1849

### Summary of Invention

### Technical Problem

However, the gloss adjuster lowers the oil repellency of a layer formed of a resin material. Therefore, the decorative sheet having the surface protective layer containing the gloss adjuster has a problem that fingerprints are easily attached.

The present disclosure has been made in view of the problems. It is an object of the present disclosure to provide a method for manufacturing a transfer master plate and a method for manufacturing a decorative sheet, wherein the decorative sheet has excellent fingerprint resistance of the surface thereof.

### Solution to Problem

To solve the above-described problem, a method for manufacturing a transfer master plate according to one aspect of the present disclosure is as defined in claim 1.

A method for manufacturing a transfer master plate according to another aspect of the present disclosure is the subject of claim 8.

A method for manufacturing a decorative sheet according to one aspect of the present disclosure is as defined in claim 9.

### Advantageous Effects of Invention

According to the aspects of the present disclosure, a method for manufacturing a decorative sheet can be provided, wherein the decorative sheet is capable of achieving both a matte feeling and fingerprint resistance of the surface thereof.

### Brief Description of Drawings

FIG. 1 is a cross-sectional view illustrating one configuration example of a decorative sheet according to a first embodiment of the present disclosure;
FIG. 2 is a cross-sectional photograph illustrating one configuration example of a first surface protective layer of the decorative sheet according to the first embodiment of the present disclosure;
FIG. 3 is a schematic view illustrating an example of a method for manufacturing a decorative sheet according to a first embodiment of the present disclosure;
FIG. 4 is a cross-sectional view illustrating one configuration example of a decorative sheet according to a second embodiment of the present disclosure;
FIG. 5 is a plan photograph illustrating one configuration example of the surface of a first surface protective layer of the decorative sheet according to the second embodiment of the present disclosure;
FIG. 6 is a cross-sectional photograph illustrating one configuration example of the first surface protective layer of the decorative sheet according to the second embodiment of the present disclosure;
FIG. 7 is an enlarged cross-sectional view illustrating one configuration example of the decorative sheet according to the second embodiment of the present disclosure;
FIGS. 8A to 8c illustrate a process chart illustrating an example of a method for manufacturing a transfer master plate used for the manufacture of the decorative sheet according to the second embodiment of the present disclosure;
FIGS. 9A to 9D are schematic views illustrating an example of a method for manufacturing the decorative sheet according to the second embodiment of the present disclosure;
FIG. 10 is a cross-sectional view illustrating one configuration example of a decorative sheet according to a third embodiment, which is a modification of the decorative sheet according to the first embodiment of the present disclosure;
FIG. 11 is a cross-sectional view illustrating one configuration example of a decorative sheet according to the third embodiment, which is a modification of the decorative sheet according to the first embodiment of the present disclosure;
FIG. 12 is a cross-sectional view illustrating one configuration example of a decorative sheet according to the third embodiment, which is a modification of the decorative sheet according to the first embodiment of the present disclosure;
FIG. 13 is a cross-sectional view illustrating one configuration example of a decorative sheet according to the third embodiment, which is a modification of the decorative sheet according to the first embodiment of the present disclosure; and
FIG. 14 is a cross-sectional view illustrating one configuration example of a decorative board according to a fourth embodiment of the present disclosure.

### Description of Embodiments

Hereinafter, the present disclosure will be described through embodiments but the following embodiments do not limit the invention according to each claim. All combinations of features described in the embodiments are not necessarily essential to the solution of the invention. The drawings schematically illustrate the invention according to each claim, and the dimensions, such as the width and the thickness, of each part are different from the actual dimensions, and ratios thereof are also different from the actual ratios.

A decorative sheet of the present disclosure is described. The decorative sheet according to the present disclosure is a decorative sheet laid on wall surfaces, fittings, furniture, and the like, for example. In the following description, the side in contact with a foundation of the decorative sheet is sometimes referred to as "bottom" and the side (surface) opposite to the side in contact with the foundation of the decorative sheet is sometimes referred to as "top".

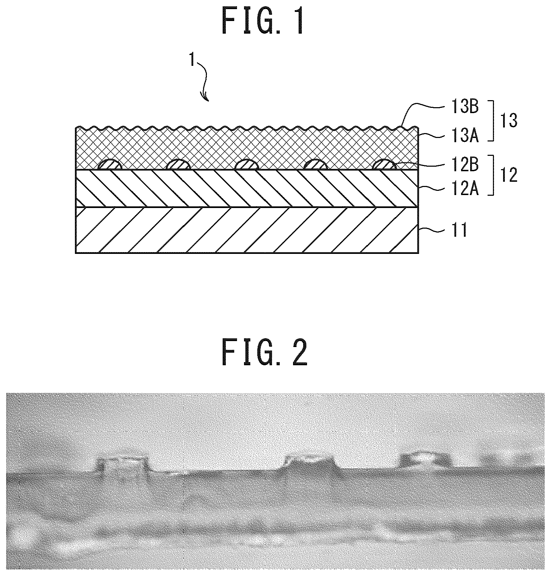

Hereinafter, aspects of the embodiments of the present disclosure are described with reference to FIGS. 1 to 14.

### 1. First embodiment

A decorative sheet 1 according to a first embodiment of the present disclosure is described using FIGS. 1 to 3. The decorative sheet 1 according to the first embodiment of the present disclosure is outside the scope of the claimed invention.

### (1. 1) Basic configuration of decorative sheet

The basic configuration of the decorative sheet according to the first embodiment of the present disclosure is described using FIG. 1. FIG. 1 is a cross-sectional view for explaining one configuration example of the decorative sheet 1 according to the first embodiment of the present disclosure. As illustrated in FIG. 1, the decorative sheet 1 includes a base material layer 11, a colored pattern layer 12, and a first surface protective layer 13. The decorative sheet 1 is constituted by depositing the base material layer 11, the colored pattern layer 12, and the first surface protective layer 13 in this order.

The base material layer 11 is a layer serving as a substrate of the decorative sheet 1 and absorbs irregularities, steps, or the like of a sticking surface to improve the construction finish of the decorative sheet 1 and conceal a color and a pattern of the sticking surface. The colored pattern layer 12 is a layer imparting at least one of a hue and a pattern to the decorative sheet 1. The first surface protective layer 13 is a layer for protecting the base material layer 11 and the colored pattern layer 12 from flaws or the like.

Hereinafter, each layer of the base material layer 11, the colored pattern layer 12, and the first surface protective layer 13 is described in detail.

### <Base material layer>

The base material layer 11 is a layer (sheet) serving as a substrate of the decorative sheet 1.

The base material layer 11 is a resin layer or a resin sheet formed of a paper material mainly containing pulp or cellulose fibers, or a resin material, for example.

When the base material layer 11 is the paper material, a paper strengthening agent, additives for improving concealment, cellulose nanofibers, or additives, such as a colorant, may be added.

When the base material layer 11 is the resin material, a thermoplastic resin represented by polypropylene, polyethylene, polyester, or the like is preferably used as the resin material. The thermoplastic resin may contain an inorganic material, such as titanium oxide or calcium carbonate, as additives. The use of at least one of polypropylene, polyethylene, and polyester as the thermoplastic resin improves the dispersibility of the inorganic material. The use of polypropylene as the thermoplastic resin further improves the dispersibility of the inorganic material.

When the base material layer 11 is a resin film, the resin film is preferably a film material mainly containing polyethylene terephthalate. The resin film may contain the above-described inorganic material as additives. When the base material layer 11 is the resin film, the base material layer 11 may be a uniaxially or biaxially oriented resin film. The base material layer 11 formed of the uniaxially or biaxially oriented resin film may contain pores inside.

When the base material layer 11 is the resin material or the resin film, the content of the inorganic material with respect to the base material layer 11 is preferably set within the range of 1% by mass or more and 90% by mass or less, more preferably set within the range of 5% by mass or more and 80% by mass or less, and still more preferably set within the range of 20% by mass or more and 80% by mass or less. By setting the content of the inorganic material within the ranges above, printability or lamination suitability can be certainly improved and cracking occurring in a bent portion of the sheet can be certainly reduced while certainly obtaining sufficient nonflammability or sufficient flame retardancy.

The thickness of the base material layer 11 is preferably within the range of 20 µm or more and 250 µm or less, more preferably within the range of 25 µm or more and 250 µm or less, and still more preferably within the range of 70 µm or more and 200 µm or less. When the thickness of the base material layer 11 is within the ranges above, the lamination suitability can be improved and cracking occurring in a bent portion of the sheet can be reduced.

The surface of the base material layer 11 may be subjected to surface treatment, such as corona treatment or plasma treatment, for example. This improves adhesiveness (adhesion) between the base material layer 11 and the colored pattern layer 12.

### <Colored pattern layer>

The colored pattern layer 12 is provided on one surface of the base material layer 11. The colored pattern layer 12 has a colored layer 12A provided on the base material layer 11 and a pattern layer 12B provided on the colored layer 12A, for example. The colored pattern layer 12 may have at least either the colored layer 12A or the pattern layer 12B according to desired design properties.

The colored layer 12A is a layer for imparting design properties by a desired hue to the decorative sheet 1 and concealing the color/pattern of a foundation material to which the decorative sheet 1 is stuck. The colored layer 12A is formed by solid printing or the like of ink, for example.

The pattern layer 12B is provided closer to the surface side of the decorative sheet 1 than the colored layer 12A, and is a layer for imparting design properties by a desired pattern to the decorative sheet 1. The pattern layer 12B is formed on the upper surface of the colored layer 12A, and has patterns, such as a wood grain pattern, a stone grain pattern, a sand grain pattern, a tiled pattern, a brickwork pattern, a cloth grain pattern, a leather tie-died pattern, and a geometric figure, formed by printing, for example.

The colored layer 12A and the pattern layer 12B are formed by screen printing or the like using ink, for example. As the ink for forming the colored layer 12A and the pattern layer 12B, isoindolinone yellow, polyazo red, phthalocyanine blue, carbon black, iron oxide, and titanium oxide can be used alone or as a mixture thereof as a pigment, for example. The inks may be aqueous solvents or organic solvents. As the organic solvents, ethyl acetate, n-butyl acetate, isobutanol, methyl isobutyl ketone, and the like are usable, for example.

The thickness of the colored layer 12A and the pattern layer 12B of the colored pattern layer 12 may be such that desired design properties are sufficiently developed. The thickness of the colored layer 12A is preferably set within the range of 2 µm or more and 20 µm or less, for example. By setting the thickness of the colored layer 12A within the range above, sufficient concealment can be developed for colors and stains of the base material layer 11 even when the colored layer 12A is colored white or light color, for example, and sufficient durability can be obtained by preventing a reduction in the adhesion strength between ink layers constituting the colored layer 12A. The thickness of the pattern layer 12B is preferably set in the range of 0.1 µm or more and 10 µm or less, for example. Herein, the "thickness of the pattern layer 12B" refers to the thickness of a part where ink is printed. The pattern layer 12B may not be provided on the entire surface of the colored layer 12A, and the colored layer 12A may be exposed from the pattern layer 12B. By setting the thickness of the pattern layer 12B within the range above, the pattern is clearly expressed or gradation is added to the pattern, so that design properties can be enhanced and, by printing a plurality of colors in an overlapping manner, so that an upper layer color and a lower layer color are overlapped on each other, the expressible hue range can be increased with limited colors.

### <First surface protective layer>

The first surface protective layer 13 is provided on the surface on the side opposite to the base material layer 11 of the colored pattern layer 12 and has irregular shapes on the surface. The first surface protective layer 13 includes a core part 13A, which is a region of a lower layer (back surface side) in the layer, and projection parts 13B (an example of a convex projection), which are regions of an upper layer (front surface side) in the layer and has the irregular shapes on the surface. The first surface protective layer 13 has the core part 13A and the projection parts 13B provided to project in a ridge-like shape from one surface of the core part 13A. Thus, the irregular shapes are formed on the surface of the first surface protective layer 13.

FIG. 2 is a cross-sectional photograph illustrating the configuration of the surface (upper surface) of the first surface protective layer 13. FIG. 2 is a cross-sectional photograph and a cross-sectional view illustrating the cross section in the width direction of the projection parts 13B. Herein, FIG. 2 is a plane photograph and a cross-sectional photograph obtained by an optical microscope (digital microscope, VHX-6000 manufactured by KEYENCE CORPORATION).

The projection parts 13B have irregular shapes formed by mechanical processing, such as embossing, as illustrated in the cross-sectional photograph of FIG. 2. The height of such projection parts 13B is preferably more than 15 µm, for example. A pitch p between the adjacent projection parts 13B (for example, interval between the tops of the projection parts 13B) is preferably more than 50 µm.

The first surface protective layer 13 is formed of a resin material. The resin material may be any of an ionizing radiation curable resin, a thermosetting resin, a thermoplastic resin, or the like.

As the ionizing radiation curable resin, for example, an ultraviolet curable resin is usable, for example. As the ultraviolet curable resin, (meth)acrylic resin, silicone-based resin, polyester-based resin, urethane-based resin, amide-based resin, and epoxy-based resin are usable, for example. The ultraviolet curable resin may be either a water-based resin or a non-water-based (organic solvent-based) resin.

The first surface protective layer 13 may contain inorganic particles. Examples of the inorganic particles include fine particles formed of inorganic materials, such as silica, glass, alumina, titania, zirconia, calcium carbonate, and barium sulfate. The addition amount of the inorganic particles in the first surface protective layer 13 is more than 0% by mass and 5% by mass or less, preferably more than 0% by mass and less than 3% by mass, more preferably more than 0% by mass and 1% by mass or less, and still more preferably more than 0.1% by mass and 0.5% by mass or less based on 100 parts by mass of the ionizing radiation curable resin. The first surface protective layer 13 preferably contains the inorganic particles in the addition amount mentioned above because the wear resistance and the flaw resistance are improved. When the first surface protective layer 13 contains the inorganic particles, the flaw resistance is improved as compared with that in a case where the inorganic particles are not contained. However, when the content of the inorganic particles is excessively high, the inorganic particles fall off from the surface of the first surface protective layer 13 or fingerprints are attached, for example, which adversely affects the fingerprint resistance. Therefore, the addition amount of the inorganic particles is preferably set to more than 0% by mass and less than 3% by mass.

The first surface protective layer 13 may be added as necessary with one or more additives selected from various additives, such as colorants, matting agents, fillers, UV absorbers, light stabilizers, heat stabilizers, antioxidants, antistatic agents, lubricants, flame retardants, antibacterial agents, antifungal agents, anti-friction agents, and light scattering agents, for example. However, the first surface protective layer 13 does not contain a gloss adjuster reducing the oil repellency and making the attachment of fingerprints easy.

The first surface protective layer 13 may completely cover the colored pattern layer 12, and can develop the function as the surface protective layer over the entire surface of the decorative sheet 1. The density of the first surface protective layer 13 can be adjusted according to the desired gloss or performance.

The thickness of the first surface protective layer 13 is preferably set in the range of 20 µm or more and 50 µm or less. By setting the thickness of the first surface protective layer 13 within the range above, degradation of the design properties by the protection of the base material layer 11 and the colored pattern layer 12 can be suppressed. When the thickness of the first surface protective layer 13 is 20 µm or more, the first surface protective layer 13 can sufficiently have functions, such as wear resistance, required as the surface protective layer. When the thickness of the first surface protective layer 13 is 50 µm or less, there is an effect that the first surface protective layer 13 does not become unnecessarily thick and the manufacturing cost does not excessively increase.

### (1. 2) Method for manufacturing decorative sheet

FIG. 3 is a schematic view illustrating a method for manufacturing the decorative sheet 1, which is outside the scope of the claimed invention. As illustrated in FIG. 3, the decorative sheet 1 is formed by extrusion molding using metal rolls 101 and 102 having a flat surface, a metal roll 110 imparted with desired irregular shapes on the surface, a T-die 104, and an ultraviolet lamp 105. A resin material constituting the first surface protective layer 13 of the decorative sheet 1 may be any of an ionizing radiation curable resin, a thermosetting resin, a thermoplastic resin, or the like, but a case of using an ultraviolet curable resin which is an ionizing radiation curable resin is described.

First, a resin film is used as the base material layer 11, and an ink of a desired hue is printed onto the base material layer 11 to form the colored layer 12A. Next, an ink of a desired hue is printed with a desired pattern on the colored layer 12A, so that the pattern layer 12B is formed. As a result, a multi-layer body 50 is formed.

Subsequently, as illustrated in FIG. 3, an ultraviolet curable resin 13' is discharged to the multi-layer body 50 using the T-die 104, for example. At this time, the ultraviolet curable resin 13' is discharged to be located on the metal roll 110 side imparted with the desired irregular shapes on the surface.

To the ultraviolet curable resin 13' discharged onto the multi-layer body 50, the irregular shapes on the surface of the metal roll 110 are transferred. Subsequently, the ultraviolet curable resin 13' is cured by being irradiated with ultraviolet rays with a wavelength of 400 nm or less by the ultraviolet lamp 105.

Thus, the decorative sheet 1 is formed which includes the first surface protective layer 13 having the irregular shape and having the core part 13A and the projection parts 13B provided to project in a ridge-like shape from one surface of the core part 13A.

The first surface protective layer 13 thus formed is formed such that the entire first surface protective layer 13 contains a resin material having a substantially uniform composition.

The decorative sheet 1 including the first surface protective layer 13 having the projection parts 13B is described above, but the configuration is not limited thereto.

For example, the first surface protective layer 13 may have irregular shapes formed by providing recessed grooves in place of the projection parts (an example of the convex projection) on the surface. In this case, the depth of the recessed groove corresponds to the height of the projection part 13B described in this embodiment, and the pitch between the recessed grooves corresponds to the pitch between the projection parts 13B.

### <Effects of First embodiment>

The decorative sheet 1 according to this embodiment, which is outside the scope of the claimed invention, has the following effects.
(1) The decorative sheet 1 of this embodiment includes the first surface protective layer 13 having the irregular shapes formed on the surface.

According to this configuration, the gloss (glossiness) of the first surface protective layer 13 can be adjusted even when the first surface protective layer 13 does not contain the gloss adjuster (matting additive). The gloss adjuster reduces the oil repellency of a layer formed of resin materials, and therefore fingerprints are easily attached. The first surface protective layer 13 does not contain the gloss adjuster, and therefore does not absorb oil, so that the oil repellency is relatively improved. Therefore, fingerprints are hardly attached to the decorative sheet 1 having the first surface protective layer 13 in various situations, such as on-site construction, furniture assembly, and daily life of residents.

(2) The decorative sheet 1 of this embodiment includes the first surface protective layer 13 having the irregular shapes formed on the surface.

According to this configuration, the oil repellency of the first surface protective layer 13 is improved, so that oil stains or the adsorption of contaminants to the surface of the decorative sheet 1 can be suppressed.

### 2. Second embodiment

A decorative sheet 2 according to a second embodiment of the present disclosure is described using FIGS. 4 to 9. The decorative sheet 2 according to the second embodiment of the present disclosure can be manufactured by a method as recited in claim 9.

The decorative sheet 2 according to the second embodiment has the same configuration as that of the decorative sheet 1 according to the first embodiment. The decorative sheet 2 according to the second embodiment is different from the decorative sheet 1 according to the first embodiment in that the decorative sheet 2 is formed using a transfer master plate manufactured by a method different from a method for manufacturing a transfer master plate used for the manufacture of the decorative sheet 1 according to the first embodiment.

Hereinafter, the configuration of the decorative sheet 2 according to the second embodiment of the present disclosure, as well as a method for manufacturing a transfer master plate and a method for manufacturing the decorative sheet 2 according to the claimed invention are described. The basic configuration of the decorative sheet 2 is the same as that of the decorative sheet 1 according to the first embodiment, but differences are described.

### (2. 1) Basic configuration of decorative sheet

As illustrated in FIG. 4, the decorative sheet 2 includes a base material layer 11, a colored pattern layer 12, and a first surface protective layer 23. The base material layer 11 and the colored pattern layer 12 are the same as the base material layer 11 and the colored pattern layer 12 of the decorative sheet 1 according to the first embodiment, and therefore a description thereof is omitted.

### <First surface protective layer>

The first surface protective layer 23 is provided on the surface on the side opposite to the base material layer 11 of the colored pattern layer 12. The first surface protective layer 23 includes a core part 23A, which is a region of a lower layer (back surface side) in the layer, and ridge-like parts 23B (an example of a convex projection), which are regions of an upper layer (front surface side) in the layer.

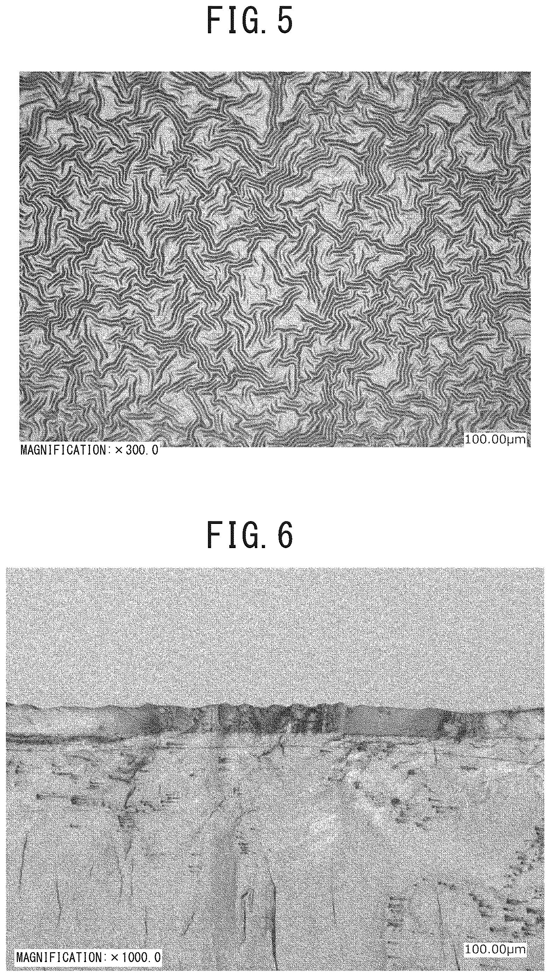

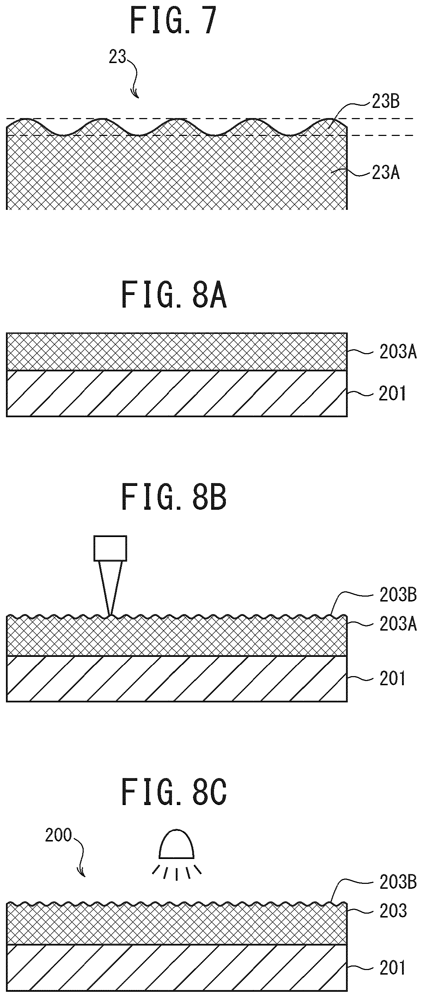

FIG. 5 is a plane photograph illustrating the configuration of the surface (upper surface) of the first surface protective layer 23. FIG. 6 is a cross-sectional photograph illustrating the configuration of the surface (upper surface) of the first surface protective layer 23. FIG. 7 is a cross-sectional view schematically illustrating the configuration of the surface (upper surface) of the first surface protective layer 23. FIGS. 6 and 7 are a cross-sectional photograph and a cross-sectional view, respectively, illustrating the cross section in the width direction of the ridge-like parts 23B. Herein, FIGS. 5 and 6 are a plane photograph and a cross-sectional photograph, respectively, obtained by an optical microscope (digital microscope, VHX-6000 manufactured by KEYENCE CORPORATION).

As illustrated in FIG. 5, the ridge-like parts 23B have a shape which is elongated and raised and in which the elongated and raised parts are linearly connected in a plan view. The ridge-like parts 23B are formed using a transfer master plate formed by irradiating the surface of an ionizing radiation curable resin with an ionizing radiation of a specific wavelength, and shrinking the surface of the ionizing radiation curable resin as described later.

Herein, in the decorative sheet 1 according to this embodiment, the "ridge-like" refers to a shape which is elongated and raised and in which the elongated and raised parts are linearly connected in a plan view. The ridge-like parts 23B may be curved or linear in a plan view, but are preferably curved from the viewpoint of fingerprint resistance on the surface of the decorative sheet 2 as illustrated in FIGS. 6 and 7. In the present disclosure, the ridge-like part 23B is, for example, a part from the lowest part to the tip of an irregular shape provided on the surface of the first surface protective layer 23, and the core part 23A refers to a part excluding the ridge-like parts 23B of the first surface protective layer 13.

The height of such ridge-like parts 23B is preferably more than 15 µm and more preferably 8 µm or less, for example. A pitch p between the adjacent ridge-like parts 23B (for example, interval between the tops of the ridge-like parts 23B) is 50 µm or less, preferably 10 µm or less, and more preferably 6.5 µm or less. The irregular shapes (ridge-like parts 23B) on the surface of the first surface protective layer 23 manufactured using a transfer master plate formed by irradiating an ionizing radiation curable resin with a high-energy ionizing radiation has a finer structure as compared with the irregular shapes formed by the mechanical processing, such as embossing, on the surface of the surface protective layer. By the formation of such fine irregular shapes on the surface of the first surface protective layer 23, the fingerprint resistance can be improved while maintaining the matte feeling on the surface of the decorative sheet 2.

As the ionizing radiation curable resin, an ultraviolet curable resin is usable, for example. As the ultraviolet curable resin, (meth)acrylic resin, silicone-based resin, polyester-based resin, urethane-based resin, amide-based resin, and epoxy-based resin are usable, for example. The ultraviolet curable resin may be either a water-based resin or a non-water-based (organic solvent-based) resin.

The first surface protective layer 23 may contain the same inorganic particles as those of the first surface protective layer 13.

The first surface protective layer 23 may be added as necessary with one or more additives selected from various additives, such as colorants, matting agents, fillers, UV absorbers, light stabilizers, heat stabilizers, antioxidants, antistatic agents, lubricants, flame retardants, antibacterial agents, antifungal agents, anti-friction agents, and light scattering agents, for example, as with the first surface protective layer 13. However, the first surface protective layer 23 does not contain a gloss adjuster reducing the oil repellency and making the attachment of fingerprints easy.

The thickness of the first surface protective layer 23 is preferably set in the range of 1.0 µm or more and 50 µm or less. By setting the thickness of the first surface protective layer 23 within the range above, degradation of the design properties by the protection of the base material layer 11 and the colored pattern layer 12 can be suppressed. When the thickness of the first surface protective layer 23 is 1.0 µm or more, the first surface protective layer 23 can sufficiently have functions, such as wear resistance, required as the surface protective layer. When the thickness of the first surface protective layer 23 is 50 µm or less, there is an effect that the first surface protective layer 23 does not become unnecessarily thick and the manufacturing cost does not excessively increase.

Such a decorative sheet 2 has glossiness of 5.0 or less in spite of the fact that the gloss adjuster (matting additive) is not contained, and thus provides a decorative sheet having excessively low glossiness. In a conventional decorative sheet, when the glossiness of the decorative sheet having a surface protective layer is about 8 or less, the content ratio of the gloss adjuster in the surface protective layer is high, so that the surface protective layer becomes cloudy. Therefore, there has been a risk that the hue or the pattern of the colored pattern layer is not clearly developed, or the design properties of the decorative sheet deteriorate. Furthermore, when a decorative sheet having glossiness close to 0 is obtained, the content ratio of the gloss adjuster in the surface protective layer is much higher, and therefore it has been difficult to form a surface protective layer with a smooth surface without generating streaks, irregularities, and the like in the formation of the surface protective layer.

The decorative sheet 2 can provide a decorative sheet having low glossiness of 5.0 or less and preferably 2.0 or less while maintaining the performance comparable to that of a decorative sheet having glossiness of 20 ± 3 or more. Herein, the "glossiness" is a measured value when measured at an incident angle of 60° using a gloss meter, gloss checker. Therefore, the decorative sheet 2 is obtained which has high oil repellency and to which fingerprints are hardly attached while maintaining the performance required as the decorative sheet 2.

### (2. 2) Method for manufacturing decorative sheet

### <Method for manufacturing transfer master plate>

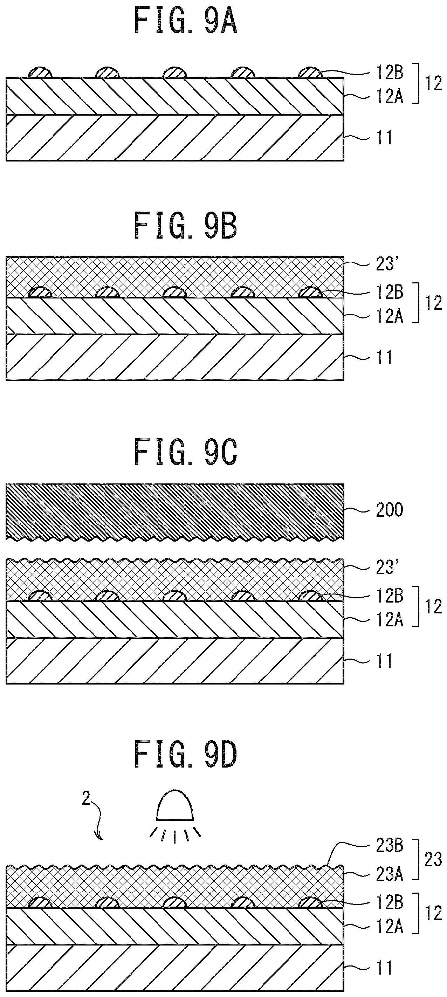

A method for manufacturing a transfer master plate and a method for manufacturing a decorative sheet using the transfer master plate as claimed in the present invention are described with reference to FIGS. 8A to 8C and 9A to 9D, respectively. FIGS. 8A to 8C illustrate a cross-sectional process chart illustrating a method for manufacturing a transfer master plate according to the second embodiment. FIGS. 9A to 9D illustrate a cross-sectional process chart illustrating a method for manufacturing a decorative sheet according to the second embodiment.

As illustrated in FIG. 8A, a resin film is used as a base material 201, and an ionizing radiation curable resin 203A is applied onto the base material layer 11. At this time, the application amount of the ionizing radiation curable resin 203A is adjusted to have a thickness enough to obtain a desired irregular height.

Subsequently, illustrated in FIG. 8B, a first ionizing radiation having energy capable of cleaving at least one of a carbonyl bond and a carbon-carbon bond is emitted to the surface of the applied ionizing radiation curable resin 203A to shrink the surface of the ionizing radiation curable resin 203A. The first ionizing radiation may be one type of ionizing radiation having a predetermined wavelength or may be a plurality of types of ionizing radiations having wavelengths different from each other. The first ionizing radiation is an excimer laser having high energy. The medium of the excimer laser may be any conventionally used medium (discharge gas) insofar as it has energy capable of cleaving at least one of the carbonyl bond and the carbon-carbon bond. As the discharge gas, rare gases, such as Xe, Ar, and Kr, or mixed gases of rare gases and halogen gases, such as ArBr, ArF, KrCl, XeI, XeCl, XeBr, KrBr, and KrF, are usable. The excimer laser has different wavelengths (center wavelengths) depending on the medium, and has wavelengths, such as about 172 nm (Xe), about 126 nm (Ar), about 146 nm (Kr), about 165 nm (ArBr), about 193 nm (ArF), about 222 nm (KrCl), about 253 nm (XeI), about 308 nm (XeCl), about 283 nm (XeBr), about 207 nm (KrBr), and about 248 nm (KrF), for example.

The irradiation of the ionizing radiation curable resin 203A with the ionizing radiation having high energy forms the irregular shapes on the surface of the ionizing radiation curable resin 203A. At this time, by adjusting the resin application amount of the ionizing radiation curable resin 203A and the irradiation time of the ionizing radiation, the shrinkage rate of the ionizing radiation curable resin 203A is adjusted. This makes it possible to adjust the finishing gloss of the decorative sheet 2 to which the irregular shapes are transferred.

By changing the type of the first ionizing radiation emitted to the ionizing radiation curable resin 203A in the formation of the irregular shapes, the sense of touch and a visually obtained effect of the surface of the decorative sheet 2 to which the irregular shapes have been transferred can be changed. For example, the ionizing radiation curable resin 203A is irradiated with the first ionizing radiation with a wavelength of about 250 nm, and then irradiated with the first ionizing radiation with a wavelength of about 172 nm to form the irregular shapes, and then the ionizing radiation curable resin 203A is cured. This makes it possible to adjust the sense of touch (texture) of the decorative sheet 1. Alternatively, it may be acceptable that the ionizing radiation curable resin 203A is irradiated with the first ionizing radiation with a wavelength of about 172 nm to form the irregular shape, and then the ionizing radiation curable resin 203A is cured, for example. Thus, the surface of the decorative sheet 2 to which the irregular shapes have been transferred is smoothed and adjusted to have low gloss or a gross matte effect (visually embossed feeling) can be imparted to the surface of the decorative sheet 2.

Subsequently, a second ionizing radiation is emitted to the ionizing radiation curable resin 203A having the shrunk surface to cure the ionizing radiation curable resin 203A as illustrated in FIG. 8C. This forms a resin layer 203 having irregular shapes 203B on the surface. The second ionizing radiation includes ultraviolet rays with a wavelength of 400 nm or less and the like, for example. The ionizing radiation curing the ionizing radiation curable resin 203A has a broad wavelength range (i.e., broad spectrum) in the range of 400 nm or less.

Thus, a transfer master plate 200 having the irregular shapes 203B on the surface is obtained.

Herein, the irregular shapes 203B formed by the shrinkage of the ionizing radiation curable resin 203A have a composition different from that of a non-shrunk part of the ionizing radiation curable resin 203A. Specifically, the irregular shapes 203B formed by the shrinkage of the ionizing radiation curable resin 203A have a composition in which the ratio of a carbonyl bond (C=O) or a carbon-carbon bond (double bond (C=C), triple bond (C≡C) between carbon and carbon) contained in the resin is lower than that of the non-shrunk part of the ionizing radiation curable resin 203A present in a deep layer. For example, the ratio of the carbonyl bond and the carbon-carbon bond contained in the resin in the irregular shapes 203B is preferably lowered by 10% or more and more preferably by 20% or more than that of the non-shrunk part of the ionizing radiation curable resin 203A present in the deep layer. This is because the irradiation of the ionizing radiation curable resin 203A with a high-energy ionizing radiation cleaves a polymer chain (carbonyl bond or carbon-carbon bond (double bond, triple bond) contained in the resin. In the ionizing radiation curable resin 203A irradiated with the high-energy ionizing radiation, a new bond (recombination, re-crosslinking) occurs in a part where the bond is cleaved, and the surface of the ionizing radiation curable resin 203A is shrunk, so that the irregular shapes 203B are formed. Such a difference in the composition between the non-shrunk part and the irregular shapes 203B of the ionizing radiation curable resin 203A is a feature when the irregular shapes 203B are formed by the irradiation with the ionizing radiation.

The irradiation of the ionizing radiation curable resin 203A with the high-energy ionizing radiation causes the recombination and the re-crosslinking in a state where the polymer chain contained in the resin is cleaved and hydrogen atoms are extracted. Therefore, the irregular shapes 203B formed by the cleavage and the recombination and re-crosslinking of the polymer chain have a configuration in which the crosslinking density is higher than that of the non-shrunk part of the ionizing radiation curable resin 203A present in the deep layer. Therefore, the porosity in the resin constituting the irregular shapes 203B serving as the outermost surface layer of the transfer master plate 200 decreases and the surface hardness of the transfer master plate 200 is improved.

Such irregular shapes 203B have a curved shape in a cross-sectional view. The irregular shapes 203B are formed by the shrinkage due to the ablation of the ionizing radiation curable resin 203A irradiated with the ionizing radiation of a specific wavelength. More specifically, due to the irradiation of the surface of the ionizing radiation curable resin 203A with a strong laser light, the ionizing radiation curable resin 203A on the locally heated surface evaporates, and atoms, molecules, plasmas, and clusters thereof are scattered, so that the irregular shapes 203B are formed. The irregular shapes 203B having a curved shape in a cross-sectional view as described above are clearly different in the shape from the ridge-like parts 23B (see FIG. 2) which are the irregular shapes formed by mechanical processing, such as embossing, on the surface of the surface protective layer.

Therefore, the irregular shapes 203B having a smooth shape are formed due to surface tension on the surface of the resin layer 203. Specifically, radicals of the ionizing radiation described above directly cleave the carbonyl bond, or the double bond or the triple bond between carbon and carbon of the resin constituting the ionizing radiation curable resin 203A. Further, ozone, oxygen radicals, and the like are generated from oxygen molecules by the irradiation with a high energy ionizing radiation, such as vacuum ultra violet, and the radicals thus generated sometimes cleave the carbonyl bond, or the double bond or the triple bond between carbon and carbon. In this case, ozone, oxygen radicals, and the like are generated from oxygen molecules having a concentration limited to 2000 ppm, preferably 1000 ppm or less, and more preferably 400 ppm or less, for example, in a vacuum atmosphere environment. The recombination of the cleaved bond with adjacent atoms, such as carbon, oxygen, and nitrogen, or radicals present in the atmosphere causes the shrinkage of the surface of the ionizing radiation curable resin 203A, so that a gentle curved shape is formed. Such a gentle shape of the irregular shapes 203B is a feature of the transfer master plate 200 in which the irregularities are formed on the surface by the irradiation with the ionizing radiation.

The height of such irregular shapes 203B on the surface of the transfer master plate 200 is preferably 15 µm or less and more preferably 8 µm or less, for example. A pitch p between the adjacent irregular shapes 203B (for example, interval between the tops of the irregular shapes 203B) is 50 µm or less, preferably 10 µm or less, and more preferably 6.5 µm or less. The irregular shapes 203B on the surface of the transfer master plate 200 formed by irradiating the ionizing radiation curable resin 203A with the high-energy ionizing radiation have a finer structure as compared with the irregular shapes formed by the mechanical processing, such as embossing, on the surface of the surface protective layer. By the transfer of such fine irregular shapes 203B to the surface of the first surface protective layer 23 using the transfer master plate 200, the fingerprint resistance can be improved while maintaining the matte feeling on the surface of the decorative sheet 2.

Hereinafter, the mechanism by which the irregular shapes 203B are formed by a first ionizing radiation irradiation is described in more detail.

The vacuum ultra violet (VUV) can cleave, using photon energy, bond energy smaller than the photon energy. Therefore, by the irradiation of the surface of the ionizing radiation curable resin 203A with the vacuum ultra violet, namely using an excimer laser, a molecular bond of organic matter in the ionizing radiation curable resin 203A is cleaved and the bonding state of a polymer on the surface of the ionizing radiation curable resin 203A is changed, so that the surface is modified (shrunk).

By combining rare gas, halogen gas, mercury, and the like as the medium of the first ionizing radiation, light sources close to monochromatic light can be obtained at wavelength intervals of 20 nm to 30 nm in the range where the wavelength is 100 nm or more and 500 nm or less. Considering a difference between the size, wavelength, of the obtained photon energy and the bond energy of the organic matter, it is preferable to use a xenon lamp emitting excimer laser with a center wavelength of 172 nm as the light source. The first ionizing radiation having a lower wavelength and stronger energy is preferable because the first ionizing radiation having a lower wavelength and stronger energy is more likely to cleave the molecular bond of the organic matter and cause surface shrinkage.

Herein, lights with a wavelength of 380 nm or less are referred to as an ultraviolet (UV). Among the lights, lights with a wavelength of 200 nm or less are referred to as the vacuum ultra violet (VUV), and the lights are absorbed by oxygen in the air and attenuated. Therefore, the removal of oxygen in the first ionizing radiation irradiation environment can further enhance the surface modification effect of the ionizing radiation curable resin 203A. It is preferable to control the reaction atmosphere by introducing a required reaction gas (for example, nitrogen gas), use a chamber system capable of reducing the oxygen concentration to 2000 ppm or less, or irradiate the ionizing radiation curable resin 203A with ultraviolet rays (particularly, light of 250 nm or less). The light energy cleaves the molecular bond of an organic substance in the ionizing radiation curable resin 203A and causes the extraction of hydrogen atoms, so that the molecular composition is likely to change, and the surface modification (shrinkage) of the ionizing radiation curable resin 203A is likely to occur.

To prevent the attachment of stains, such as hand oil and fingerprints, for example, to the resin surface, it is necessary to impart oil repellency. To that end, the ionizing radiation is emitted while reducing the oxygen concentration in the ionizing radiation irradiation atmosphere as low as possible (ideally under the condition of 400 ppm or less), so that the performance of the decorative sheet targeted by this application can be developed. By adjusting the oxygen concentration during light irradiation, the desired surface performance can be developed.

Photons excited by the irradiation with the excimer laser are strongly absorbed by the polymer chain of the ionizing radiation curable resin 203A serving as the surface protective layer of the decorative sheet surface, reach a depth of about several tens to hundreds of nm of the ionizing radiation curable resin 203A, and generate polymer radicals. The polymer radicals cause the cleavage and the recombination and re-crosslinking of the polymer chain of the ionizing radiation curable resin 203A. Thus, the molecular weight increases on the surface of the ionizing radiation curable resin 203A, and the free volume (porosity) in the polymer decreases, resulting in the formation of the fine irregular shapes 203B connected in a wavy shape like folding creases.

A pitch (pitch between irregularities) I between fine structures of the shrinkage caused by irradiating the ionizing radiation curable resin 203A with the excimer laser can be obtained by the Polanyi's Equation represented by Equation (1) below and the Polanyi's Equation focusing on the 0th-order diffracted light and the first-order diffracted light represented by Equation (2) below. $I ⋅ sinφ = mλ$ (1) $I ⋅ sin \left[arctan \left(x/d\right)\right] = λ$ (2)

Herein, in Equation (1), I is the pitch between the fine structures, φ is the angle of the diffracted light of the excimer laser, m is an integer of 0 or more, and λ is the wavelength of the excimer laser. In Equation (2), x is the distance between the 0th-order diffracted light and the first-order diffracted light on a screen, and d is the distance between the screen on which the diffracted light is projected and the ionizing radiation curable resin 203A as a sample.

By changing an incident angle θ of the laser irradiating the ionizing radiation curable resin 203A, the pattern of the fine structures of the shrinkage generated in the ionizing radiation curable resin 203A can be controlled. In the methods for manufacturing a transfer master plate 200 according to the present invention, the incident angle of the excimer laser is 0°. When the incident angle of the excimer laser is close to 0°, the pattern of the fine structures exhibits isotropy with respect to a portion irradiated with the laser, and random fine structures are generated. On the other hand, when the incident angle θ of the laser becomes larger, the pattern of the fine structures exhibits a large anisotropy with respect to the portion irradiated with the laser. The surface shape of the ionizing radiation curable resin 203A shrunk by the excimer laser with an incident angle of 0° as in the claimed methods for manufacturing a transfer master plate is effective for improving fingerprint resistance, contamination resistance, and flaw resistance, for example. This is because the isotropically lined random fine structures make the attachment of contaminants, flaws, gloss changes, and the like inconspicuous. The interval (pitch) I between the fine structures formed by the irradiation with the laser with an incident angle of 0° is substantially the same as the wavelength λ of the excimer laser to be emitted. When the incident angle θ is changed, the shape of the fine structures remains a vertical stripe pattern and the interval I changes. The interval I is obtained by Equation (3) below based on the incident angle θ of the laser. $I = λ / cosθ$ (3)

### <Method for manufacturing decorative sheet>

As illustrated in FIG. 9A, the colored layer 12A is formed, using a resin film as the base material layer 11, by printing an ink of a desired hue onto the base material layer 11. Next, the pattern layer 12B is formed by printing an ink of a desired hue with a desired pattern onto the colored layer 12A.

Subsequently, an ionizing radiation curable resin 23' is applied onto the colored layer 12A on which the pattern layer 12B is formed (colored pattern layer 12) as illustrated in FIG. 9B. At this time, the application amount of the ionizing radiation curable resin 23' can be adjusted according to desired gloss and performance such a degree that at least the colored pattern layer 12 can be completely covered and is preferably adjusted to 2.0 g/m² or more and 20 g/m² or less, for example.

Subsequently, as illustrated in FIG. 9C, the irregular shapes 203B are transferred to the ionizing radiation curable resin 23' using the transfer master plate 200. Finally, as illustrated in FIG. 9D, a second ionizing radiation is emitted to the ionizing radiation curable resin 23' to which the irregular shapes 203B of the transfer master plate 200 have been transferred to cure the ionizing radiation curable resin 23'. Herein, as the second ionizing radiation, the same radiation as the second ionizing radiation for curing ionizing radiation curable resin used in the manufacture of the transfer master plate 200 is usable.

Thus, the decorative sheet 2 is formed which includes the first surface protective layer 23 having, on the surface, the irregular shapes formed by the core part 23A and the ridge-like parts 23B provided to project in a ridge-like shape from one surface (upper surface) of the core part 23A.

The first surface protective layer 23 thus formed is formed such that the entire first surface protective layer 23 contains a resin material having a substantially uniform composition.

### (2. 3) Modification of method for manufacturing decorative sheet

In the second embodiment, the ionizing radiation having high energy is emitted to the ionizing radiation curable resin 203A to shrink and then cure the surface, thereby forming the transfer master plate 200 containing the resin layer 203 having the irregular shapes 203B on the surface, but the present disclosure is not limited to such a configuration.

For example, it may be acceptable that the irregular shapes 203B formed on the surface of the resin layer 203 are measured by a three-dimensional shape measuring device to obtain irregular shape data indicating the irregular shapes 203B, and a transfer master plate having irregular shapes formed based on the irregular shape data is formed. In this case, by the formation of irregular shapes for master plate corresponding to the irregular shapes 203B on the surface of a metal material, such as a metal plate or a metal roll, based on the irregular shape data by laser engraving or the like, a transfer master plate which is the metal material having the irregular shapes for master plate can be formed. Such method for manufacturing a transfer master plate 200 is the subject of claim 8.

### <Effects of Second embodiment>

The decorative sheet 2 according to this embodiment of the present disclosure, which can be manufactured by a method as recited in claim 9, has the following effects in addition to the effects described in the first embodiment.

(3) The decorative sheet 2 according to this embodiment includes the first surface protective layer 23 not containing the gloss adjuster.

According to this configuration, when the surface of the decorative sheet 2 is scratched, particles of the gloss adjuster do not fall off, which can make it difficult to cause gloss changes or scratches on the surface of the decorative sheet 2.

(4) The decorative sheet 2 according to this embodiment has the first surface protective layer 23 not containing the gloss adjuster.

According to this configuration, the content of additives in the first surface protective layer 23 can be lowered, and therefore the cloudiness of the first surface protective layer 23 can be prevented and the formation of the first surface protective layer 23 is facilitated.

(5) The method for manufacturing the decorative sheet 2 according to this embodiment uses the metal material as the transfer master plate, and therefore can improve the productivity of the decorative sheet as compared with a case of using the transfer master plate formed of the resin material.

### 3. Third embodiment

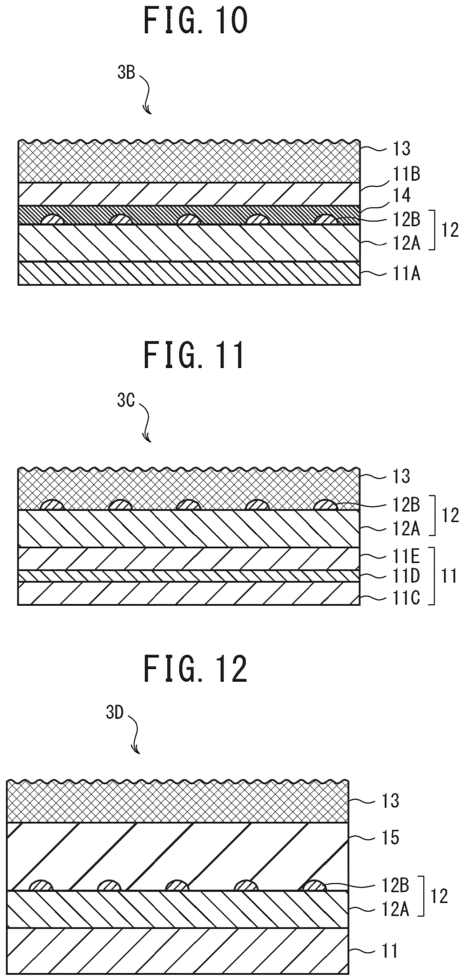

Decorative sheets according to a third embodiment of the present disclosure are described using FIGS. 10 to 13. Hereinafter, as the third embodiment, a first configuration example to a fifth configuration example of the decorative sheets manufactured by the manufacturing method according to any of the first to third embodiments are described. While the decorative sheets according to the third embodiment of the present disclosure manufactured by the manufacturing method according to the first embodiment are outside the scope of the claimed invention, the decorative sheets according to the third embodiment of the present disclosure can be manufactured by the manufacturing method as claimed in claim 9. FIGS. 10 to 13 are cross-sectional views illustrating a decorative sheet 3B described in the second configuration example, a decorative sheet 3C described in the third configuration example, a decorative sheet 3D described in the fourth configuration example, and a decorative sheet 3E described in a fifth configuration example, respectively, among the decorative sheets according to the third embodiment of the present disclosure.

Hereinafter, the decorative sheets of the first configuration example to the fifth configuration example are described in order.

### (3. 1) First configuration example

The first configuration example of the third embodiment describes the decorative sheet 3A (not illustrated) in which the first surface protective layer 13 is formed in a multilayer.

The decorative sheet 3A has a first surface protective layer 13 in which two or more of the same ionizing radiation curable resins are deposited or the first surface protective layer 13 in which two or more of different ionizing radiation curable resins are deposited and has irregular shapes formed on the outermost surface layer of the first surface protective layer 13.

### (3. 2) Second configuration example

The decorative sheet 3B according to the second configuration example of the third embodiment of the present disclosure is described using FIG. 10.

As illustrated in FIG. 10, the decorative sheet 3B is constituted by depositing a base material layer 11 having a multi-layer structure, a colored pattern layer 12, and the first surface protective layer 13 in this order. More specifically, the decorative sheet 3B is different from the decorative sheet 1 according to the first embodiment in that a first film layer 11A and a second film layer 11B are provided in place of the single-layer base material layer 11.

Hereinafter, the base material layer 11 of the decorative sheet 3B is described in detail. Note that the layers other than the base material layer 11 (colored pattern layer 12 and first surface protective layer 13) have the same configurations as those of the layers of the decorative sheet 1, and therefore a description thereof is omitted.

### <Base material layer>

The base material layer 11 has a configuration in which the first film layer 11A and the second film layer 11B are deposited.

The first film layer 11A and the second film layer 11B may be resin films formed of the same resin material or resin films formed of different resin materials. For example, the first film layer 11A may be a polyethylene film and the second film layer 11B may be a polypropylene film. In this case, it is preferable to provide the colored pattern layer 12 on the first film layer 11A, and deposit an adhesive resin layer 14 and the second film layer 11B on the colored pattern layer 12. The first surface protective layer 13 is preferably provided on the second film layer 11B. With such a deposited configuration, it can be prevented that the colored pattern layer 12 is exposed, so that the wear resistance, the flaw resistance, the contamination resistance, and the weather resistance deteriorate. When the colored pattern layer 12 is exposed, the weather resistance is particularly likely to deteriorate. Therefore, when the decorative sheet is required to have high weather resistance, it is preferable to use the decorative sheet 3B in which films (first film layer 11A and second film layer 11B) are used as the base material layer and the colored pattern layer 12 is sandwiched between the films.

The first film layer 11A and the second film layer 11B have a function as the base material layer in two layers. The total thickness of the first film layer 11A and the second film layer 11B functioning as the base material layer is preferably within the range of 50 µm or more and 250 µm or less and more preferably within the range of 70 µm or more and 200 µm or less. When the total thickness of the first film layer 11A and the second film layer 11B is within the ranges above, the lamination suitability can be improved and cracking occurring in a bent portion of the sheet can be reduced.

The film layer functioning as the base material layer 11 may contain three or more layers.

### (3. 3) Third configuration example

The decorative sheet 3C according to the third configuration example of the third embodiment of the present disclosure is described using FIG. 11.

In the third configuration example of the third embodiment, the decorative sheet 3C having a base material layer 11' formed in a multilayer is described with reference to FIG. 11.

As illustrated in FIG. 11, the decorative sheet 3C is constituted by depositing the base material layer 11' having a multi-layer structure, the colored pattern layer 12, and the first surface protective layer 13 in this order. More specifically, the decorative sheet 3C is different from the decorative sheet 1 according to the first embodiment in that the base material layer 11' in which a first paper material 11C, a moisture-proof resin layer 11D, and a second paper material 11E are deposited in order is provided in place of the single-layer base material layer 11.

Hereinafter, the base material layer 11' of the decorative sheet 3C is described in detail. Note that the layers other than the base material layer 11' (colored pattern layer 12 and first surface protective layer 13) have the same configurations as those of the layers of the decorative sheet 1, and therefore a description thereof is omitted.

### <Base material layer>

The base material layer 11' is constituted by depositing the first paper material 11C, the moisture-proof resin layer 11D, and the second paper material 11E in order.

The moisture-proof resin layer 11D is formed of a polyethylene resin, for example. In this case, the moisture permeability can be finely adjusted by the type of a resin material constituting the moisture-proof resin layer 11D or the thickness of the moisture-proof resin layer 11D, and an effect of suppressing a warp of the moisture-proof resin layer 11D and the like can be obtained.

The first paper material 11C, the moisture-proof resin layer 11D, and the second paper material 11E have a function as the base material layer in three layers. The total thickness of the first paper material 11C, the moisture-proof resin layer 11D, and the second paper material 11E functioning as the base material layer is preferably within the range of 50 µm or more and 250 µm or less and more preferably within the range of 70 µm or more and 200 µm or less. When the total thickness of the first paper material 11C, the moisture-proof resin layer 11D and the second paper material 11E is within the ranges above, the lamination suitability can be improved and cracking occurring in a bent portion of the sheet can be reduced.

The paper material functioning as the base material layer may contain three or more layers deposited via a moisture-proof resin layer.

### (3. 4) Fourth configuration example

The decorative sheet 3D according to the fourth configuration example of the third embodiment of the present disclosure is described using FIG. 12.

As illustrated in FIG. 12, the decorative sheet 3D is constituted by depositing the base material layer 11, the colored pattern layer 12, a transparent layer 15, the first surface protective layer 13, and a second surface protective layer 26 in this order. More specifically, the decorative sheet 2D is different from the decorative sheet 1 according to the first embodiment in that the transparent layer 15 is provided between the colored pattern layer 12 and the first surface protective layer 13.

Hereinafter, the base material layer 11 of the decorative sheet 3B is described in detail. Note that the layers other than the transparent layer 15 (base material layer 11, colored pattern layer 12, and first surface protective layer 13) have the same configurations as those of the layers of the decorative sheet 1, and therefore a description thereof is omitted.

### <Transparent layer>

The transparent layer 15 contains a resin material. As the resin material constituting the transparent layer 15, a thermosetting resin may be used, for example, and acrylic resin, silicone-based resin, polyester-based resin, urethane-based resin, amide-based resin, epoxy-based resin, or the like may be used. Further, an adhesive resin layer may be provided in a lower layer of the transparent layer 15.

For the base material layer 11, a polyolefin film, such as a polyethylene film or a polypropylene film, may be used.

In such a decorative sheet 3D, the colored pattern layer 12 is prevented from being exposed, so that a reduction in wear resistance, flaw resistance, and contamination resistance is suppressed.

### (3. 5) Fifth configuration example

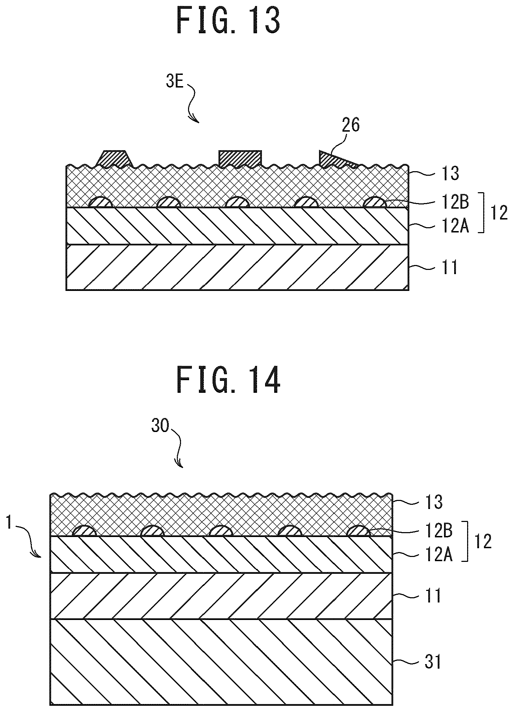

The decorative sheet 3E according to the fifth configuration example of the third embodiment of the present disclosure is described using FIG. 13.

The decorative sheet 3E includes the base material layer 11, the colored pattern layer 12, the first surface protective layer 13, and the second surface protective layer 26. The decorative sheet 3E is constituted by depositing the base material layer 11, the colored pattern layer 12, the first surface protective layer 13, and the second surface protective layer 26 in this order. More specifically, the decorative sheet 2 is different from the decorative sheet 1 according to the first embodiment in that the second surface protective layer 26 is provided on the upper surface of the first surface protective layer 13.

Hereinafter, the second surface protective layer 26 is described. Note that the layers other than the second surface protective layer 26 (base material layer 11, colored pattern layer 12, and first surface protective layer 13) have the same configurations as those of the layers of the decorative sheet 1, and therefore a description thereof is omitted.

### (3. 5. 1) Basic configuration of decorative sheet

### <Second surface protective layer>

The second surface protective layer 26 is provided on a part of the irregular shape formation surface of the first surface protective layer 13. The second surface protective layer 26 is a layer partially formed on the first surface protective layer 13 to generate a gloss difference between the first surface protective layer 13 and the second surface protective layer 26 and express visually embossed feeling by a gross matte effect.

The second surface protective layer 26 is formed of a resin material, such as an ionizing radiation curable resin or a thermosetting resin, and is preferably formed of the ionizing radiation curable resin.

As the ionizing radiation curable resin, the same materials as those of the first surface protective layer 13 are usable.

As the thermosetting resin, it is preferable to use a thermosetting resin having a urethane bond, such as a two-component curable urethane resin, for example, from the viewpoint of the gloss difference between the first surface protective layer 13 and the second surface protective layer 26.

As the two-component curable urethane resin, a urethane resin mainly containing polyol, and isocyanate as a cross-linking agent (curing agent) is usable, for example.

The polyol is one having two or more hydroxyl groups in the molecules, and polyethylene glycol, polypropylene glycol, acrylic polyol, polyester polyol, polyether polyol, polycarbonate polyol, and polyurethane polyol are usable, for example.

As the isocyanate, polyvalent isocyanates having two or more isocyanate groups in the molecules are usable. As the polyvalent isocyanates, aromatic isocyanates, such as 2,4-tolylene diisocyanate, xylene diisocyanate, and 4,4-diphenylmethane diisocyanate, or aliphatic (or alicyclic) isocyanates, such as 1,6-hexamethylene diisocyanate, isophorone diisocyanate, hydrogenated tolylene diisocyanate, and hydrogenated diphenylmethane diisocyanate, are usable, for example. Further, adducts or multimers of the above-described various isocyanates are usable. For example, a tolylene diisocyanate adduct, a tolylene diisocyanate trimer, and the like are mentioned. Among the isocyanates described above, the aliphatic (or alicyclic) isocyanates are preferable in that the weather resistance and the thermal yellowing resistance can be improved, and 1,6-hexamethylene diisocyanate is usable, for example.

The second surface protective layer 26 is partially formed on the first surface protective layer 13, and can adjust the covered area according to the design properties and the desired performance. The second surface protective layer 26 is preferably provided to cover 10% or more and 90% or less of the surface of the first surface protective layer 13. When expressing a gross matte effect (visually embossed feeling), the second surface protective layer 26 is preferably provided to cover 10% or more and 80% or less of the surface of the first surface protective layer 13. When an improvement of the scratch resistance, the contamination resistance, and the oil repellency as the decorative sheet 2 is required, the second surface protective layer 26 is preferably provided to cover 10% or more and 80% or less and more preferably provided to cover 10% or more and 30% or less of the surface of the first surface protective layer 13.

The base material layer 11, the colored pattern layer 12, and the first surface protective layer 13 of the decorative sheet 2 are formed in the same manner as those of the decorative sheet **1.**

The second surface protective layer 26 is formed by applying a resin material to the upper surface of the first surface protective layer 13 by screen printing, offset printing, gravure printing, or the like, for example, and curing the resin material.

Thus, the decorative sheet 2 is formed.

The decorative sheet 3E has the second surface protective layer 26 having relatively high glossiness in a part of the irregular shape formation surface of the low-gloss first surface protective layer 13.

According to this configuration, the decorative sheet 2 having the gross matte effect (visually embossed feeling) can be obtained without causing cloudiness of the first surface protective layer 13 and the second surface protective layer 26 in addition to the effects described in the first embodiment.

### (3. 5. 2) Modification

In the decorative sheet 2, the pattern layer 12B of the colored pattern layer 12 and the gross matte effect (visually embossed feeling) produced by the gloss difference between the first surface protective layer 13 and the second surface protective layer 26 may be synchronized with each other. The decorative sheet 1 in which the pattern layer 12B and the visually embossed feeling are synchronized with each other can produce more excellent visually embossed feeling than that in a case where the gross matte effect is expressed only by the gloss difference between the first surface protective layer 13 and the second surface protective layer 26.

### 4. Fourth embodiment

A decorative board according to a fourth embodiment of the present disclosure, which is outside the scope of the claimed invention, is described using FIG. 14.

FIG. 14 is cross-sectional view for explaining one configuration example of a decorative board 30 according to the fourth embodiment of the present disclosure.

The decorative board 30 includes a decorative sheet 1 and a substrate 31. The decorative board 30 is constituted by depositing the substrate 31, a base material layer 11, a colored pattern layer 12, and a first surface protective layer 13 in this order.

The decorative board 30 may have the decorative sheet 2 in place of the decorative sheet 1. The decorative board 30 may have the decorative sheets 3A to 3D, which are the modifications of the decorative sheet 1, in place of the decorative sheet 1.

Hereinafter, the substrate 31 is described. The layers other than the substrate 31 (the layers of the decorative sheet including the base material layer 11, the colored pattern layer 12, and the first surface protective layer 13) have the same configurations as those of the layers described in the first embodiment and the second embodiment, and therefore a description thereof is omitted.

### (4. 1) Basic configuration of decorative sheet

### <Substrate>

The substrate 31 may be a woody board, a medium density fiberboard (MDF), a particle board, a metal board, a non-combustible board, a composite board containing a plurality of materials, or the like, or may be a flash substrate or the like, for example. The substrate 31 may be a kneaded material of plywood and MDF.

Further, a primer layer, a concealing layer, or the like may be provided on the surface facing the decorative sheet 1 on the substrate 31.

### Reference Signs List

- 1, 2, 3A to 3E: decorative sheet
- 11, 11': base material layer
- 11A: first film layer
- 11B: second film layer
- 11C: first paper material
- 11D: moisture-proof resin layer
- 11E: second paper material
- 12: colored pattern layer
- 12A: colored layer
- 12B: pattern layer
- 13, 23: first surface protective layer
- 13': ultraviolet curable resin
- 13A: core part
- 13B: projection part
- 14: adhesive resin layer
- 15: transparent layer
- 23': ionizing radiation curable resin
- 23A: core part
- 23B: ridge-like part
- 26: second surface protective layer
- 30: decorative board

## Claims

1. A method for manufacturing a transfer master plate (200) which is a resin material having irregular shapes (203B) for master plate on a surface, comprising:
irradiating a surface of an applied ionizing radiation curable resin (203A) with a first ionizing radiation having energy capable of cleaving a polymer chain of the ionizing radiation curable resin to shrink the surface of the ionizing radiation curable resin (203A), forming the irregular shapes (203B) for master plate on the surface of the ionizing radiation curable resin (203A), irradiating the shrunk ionizing radiation curable resin with a second ionizing radiation curing the ionizing radiation curable resin to cure the ionizing radiation curable resin, and forming the transfer master plate (200), wherein
the transfer master plate (200) has a core part formed of the ionizing radiation curable resin and ridge-like parts provided to project in a ridge-like shape from one surface of the core part,
and a pitch between adjacent ridge-like parts is adjusted by an incident angle and wavelength of the first ionizing radiation to be 50 µm or less, wherein the first ionizing radiation is an excimer laser and the incident angle of the excimer laser is 0°.

2. The method for manufacturing a transfer master plate (200) according to claim **1,** wherein the first ionizing radiation has energy capable of cleaving at least one of a carbonyl bond and a carbon-carbon bond.

3. The method for manufacturing a transfer master plate (200) according to claim 1 or **2,** wherein
the ridge-like parts and the core part are integrally formed, and
the ridge-like parts have a composition in which ratios of a carbonyl bond and a carbon-carbon bond contained in the ionizing radiation curable resin (203A) are lower than the ratios of the core part.

4. The method for manufacturing a transfer master plate (200) according to claim **3,** wherein the ridge-like parts have a composition in which the ratios of the carbonyl bond and the carbon-carbon bond contained in the ionizing radiation curable resin (203A) are 10% or more lower than the ratios of the core part.

5. The method for manufacturing a transfer master plate (200) according to any one of claims 1 to **4,** wherein the ridge-like parts have a crosslinking density higher than a crosslinking density of the core part.

6. The method for manufacturing a transfer master plate (200) according to any one of claims 1 to 5, wherein the ionizing radiation curable resin (203A) is applied to a surface of a substrate (201).

7. The method for manufacturing a transfer master plate (200) according to any one of claims 1 to **5,** wherein the ionizing radiation curable resin (203A) is applied to a surface of a substrate (201), and
after curing of the ionizing radiation curable resin (203A), the base material (201) is peeled off.

8. A method for manufacturing a transfer master plate (200) which is a metal material having irregular shapes for master plate on a surface, comprising:
irradiating a surface of an applied ionizing radiation curable resin (203A) with a first ionizing radiation having energy capable of cleaving a polymer chain of the ionizing radiation curable resin to shrink the surface of the ionizing radiation curable resin (203A), forming irregular shapes (203B) for transfer on the surface of the ionizing radiation curable resin, irradiating the shrunk ionizing radiation curable resin (203B) with a second ionizing radiation curing the ionizing radiation curable resin to cure the ionizing radiation curable resin, and forming a resin layer (203) having the irregular shapes (203B) for transfer on a surface, wherein
the resin layer (203) has a core part formed of the ionizing radiation curable resin and ridge-like parts provided to project in a ridge-like shape from one surface of the core part,
and a pitch between adjacent ridge-like parts is adjusted by an incident angle and wavelength of the first ionizing radiation to be 50 µm or less, wherein the first ionizing radiation is an excimer laser and the incident angle of the excimer laser is 0°;
measuring the irregular shapes (203B) for transfer formed on the surface of the resin layer (203) by a three-dimensional shape measuring device to acquire irregular shape data indicating the irregular shapes for transfer; and
forming the irregular shapes for master plate corresponding to the irregular shapes for transfer on the surface of the metal material based on the irregular shape data to form the transfer master plate (200).

9. A method for manufacturing a decorative sheet (2) comprising:
applying a resin material to one surface of a base material layer (11);
using the transfer master plate (200) formed by the method for manufacturing a transfer master plate (200) according to any one of claims 1 to 8, transferring the irregular shapes (203B) for master plate provided on the surface of the transfer master plate (200) to the resin material; and
curing the resin material to form, on one surface of the base material layer (11), a first surface protective layer (23) in which irregular shapes corresponding to the irregular shapes for master plate are formed on a surface of the resin material.

## Patentansprüche

1. Verfahren zur Herstellung einer Transfermasterplatte (200), die ein Harzmaterial mit unregelmäßigen Formen (203B) für eine Masterplatte auf einer Oberfläche ist, wobei das Verfahren folgendes umfasst:
Bestrahlen einer Oberfläche eines applizierten, mit ionisierender Strahlung härtbaren Harzes (203A) mit einer ersten ionisierenden Strahlung mit einer Energie, die eine Polymerkette des mit ionisierender Strahlung härtbaren Harzes spalten kann, um die Oberfläche des mit ionisierender Strahlung härtbaren Harzes (203A) zu schrumpfen, Ausbilden der unregelmäßigen Formen (203B) für eine Masterplatte auf der Oberfläche des mit ionisierender Strahlung härtbaren Harzes (203A), Bestrahlen des geschrumpften, mit ionisierender Strahlung härtbaren Harzes mit einer zweiten ionisierenden Strahlung, die das mit ionisierender Strahlung härtbare Harz härtet, um das mit ionisierender Strahlung härtbare Harz zu härten, und Bilden der Transfermasterplatte (200), wobei
die Transfermasterplatte (200) einen aus dem mit ionisierender Strahlung härtbaren Harz gebildeten Kernteil und gratartige Teile, die in einer gratartigen Form von einer Oberfläche des Kernteils vorstehen, aufweist
und ein Abstand zwischen benachbarten gratartigen Teilen durch einen Einfallswinkel und die Wellenlänge der ersten ionisierenden Strahlung auf 50 µm oder weniger eingestellt wird, wobei die erste ionisierende Strahlung ein Excimerlaser ist und der Einfallswinkel des Excimerlasers 0° ist.

2. Verfahren zur Herstellung einer Transfermasterplatte (200) gemäß Anspruch 1, bei dem die erste ionisierende Strahlung Energie hat, die mindestens eine Bindung von einer Carbonylbindung und einer Kohlenstoff-Kohlenstoff-Bindung spalten kann.

3. Verfahren zur Herstellung einer Transfermasterplatte (200) gemäß Anspruch 1 oder 2, bei dem
die gratartigen Teile und der Kernteil integral ausgebildet sind und
die gratartigen Teile eine Zusammensetzung aufweisen, bei der Verhältnisse einer Carbonylbindung und einer Kohlenstoff-Kohlenstoff-Bindung, die in dem mit ionisierender Strahlung härtbaren Harz (203A) enthalten sind, niedriger sind als die Verhältnisse in dem Kernteil.

4. Verfahren zur Herstellung einer Transfermasterplatte (200) gemäß Anspruch 3, bei dem die gratartigen Teile eine Zusammensetzung aufweisen, bei der die Verhältnisse der Carbonylbindung und der Kohlenstoff-Kohlenstoff-Bindung, die in dem mit ionisierender Strahlung härtbaren Harz (203A) enthalten sind, mindestens 10 % niedriger sind als die Verhältnisse in dem Kernteil.

5. Verfahren zur Herstellung einer Transfermasterplatte (200) gemäß mindestens einem der Ansprüche 1 bis 4, bei dem die gratartigen Teile eine höhere Vernetzungsdichte aufweisen als die Vernetzungsdichte des Kernteils.

6. Verfahren zur Herstellung einer Transfermasterplatte (200) gemäß mindestens einem der Ansprüche 1 bis 5, bei dem das mit ionisierender Strahlung härtbare Harz (203A) auf eine Oberfläche eines Substrats (201) appliziert wird.

7. Verfahren zur Herstellung einer Transfermasterplatte (200) gemäß mindestens einem der Ansprüche 1 bis 5, bei dem das mit ionisierender Strahlung härtbare Harz (203A) auf eine Oberfläche eines Substrats (201) appliziert wird und
das Basismaterial (201) nach dem Härten des mit ionisierender Strahlung härtbaren Harzes (203A) abgezogen wird.

8. Verfahren zur Herstellung einer Transfermasterplatte (200), die ein Metallmaterial mit unregelmäßigen Formen für eine Masterplatte auf einer Oberfläche ist, wobei das Verfahren folgendes umfasst:
Bestrahlen einer Oberfläche eines applizierten, mit ionisierender Strahlung härtbaren Harzes (203A) mit einer ersten ionisierenden Strahlung mit einer Energie, die eine Polymerkette des mit ionisierender Strahlung härtbaren Harzes spalten kann, um die Oberfläche des mit ionisierender Strahlung härtbaren Harzes (203A) zu schrumpfen, Ausbilden von unregelmäßigen Formen (203B) für den Transfer auf der Oberfläche des mit ionisierender Strahlung härtbaren Harzes, Bestrahlen des geschrumpften, mit ionisierender Strahlung härtbaren Harzes (203B) mit einer zweiten ionisierenden Strahlung, die das mit ionisierender Strahlung härtbare Harz härtet, um das mit ionisierender Strahlung härtbare Harz zu härten, und Bilden einer Harzschicht (203) mit den unregelmäßigen Formen (203B) für den Transfer auf einer Oberfläche, wobei
die Harzschicht (203) einen aus dem mit ionisierender Strahlung härtbaren Harz gebildeten Kernteil und gratartige Teile, die in einer gratartigen Form von einer Oberfläche des Kernteils vorstehen, aufweist,
und ein Abstand zwischen benachbarten gratartigen Teilen durch einen Einfallswinkel und die Wellenlänge der ersten ionisierenden Strahlung auf 50 µm oder weniger eingestellt wird, wobei die erste ionisierende Strahlung ein Excimerlaser ist und der Einfallswinkel des Excimerlasers 0° ist;
Vermessen der unregelmäßigen Formeln (203B) für den Transfer, die auf der Oberfläche der Harzschicht (203) gebildet sind, mit einer Messvorrichtung für dreidimensionale Formen, um Daten der unregelmäßigen Formen, die die unregelmäßigen Formen für den Transfer angeben, zu erfassen; und
Ausbilden der unregelmäßigen Formen für die Masterplatte, die den unregelmäßigen Formen für den Transfer entsprechen, auf Basis der Daten für die unregelmäßigen Formen auf der Oberfläche des Metallmaterials, um die Transfermasterplatte (200) auszubilden.

9. Verfahren zur Herstellung einer Dekorfolie (2), das folgendes umfasst:
Applizieren eines Harzmaterials auf eine Oberfläche einer Basismaterialschicht (11);
unter Verwendung der durch das Verfahren zur Herstellung einer Transfermasterplatte (200) gemäß mindestens einem der Ansprüche 1 bis 8 gebildeten Transfermasterplatte (200), Transferieren der auf der Oberfläche der Transfermasterplatte (200) vorhandenen unregelmäßigen Formen (203B) auf das Harzmaterial; und
Härten des Harzmaterials, um eine erste Oberflächenschutzschicht (23), in der unregelmäßige Formen, die den unregelmäßigen Formen für die Masterplatte entsprechen, auf einer Oberfläche des Harzmaterials ausgebildet sind, auf einer Oberfläche der Basismaterialschicht (11) zu bilden.

## Revendications

1. Procédé de fabrication d'une plaque maîtresse de transfert (200), qui est un matériau en résine présentant des formes irrégulières (203B) pour plaque maîtresse sur une surface, comprenant :
l'irradiation d'une surface d'une résine durcissable par rayonnement ionisant (203A) appliquée avec un premier rayonnement ionisant présentant une énergie apte à cliver une chaîne polymère de la résine durcissable par rayonnement ionisant pour rétrécir la surface de la résine durcissable par rayonnement ionisant (203A), la formation des formes irrégulières (203B) pour plaque maîtresse sur la surface de la résine durcissable par rayonnement ionisant (203A), l'irradiation de la résine durcissable par rayonnement ionisant rétrécie avec un second rayonnement ionisant durcissant la résine durcissable par rayonnement ionisant pour durcir la résine durcissable par rayonnement ionisant, et la formation de la plaque maîtresse de transfert (200), dans lequel
la plaque maîtresse de transfert (200) présente une partie de base formée de la résine durcissable par rayonnement ionisant et des parties en forme de crête disposées pour faire saillie sous une forme de crête depuis une surface de la partie de base,
et un pas entre des parties en forme de crête adjacentes est ajusté par un angle d'incidence et une longueur d'onde du premier rayonnement ionisant à 50 µm ou moins, dans lequel le premier rayonnement ionisant est un laser excimère et l'angle d'incidence du laser excimère est de 0°.

2. Procédé de fabrication d'une plaque maîtresse de transfert (200) selon la revendication 1, dans lequel le premier rayonnement ionisant présente une énergie apte à cliver au moins une parmi une liaison carbonyle et une liaison carbone-carbone.

3. Procédé de fabrication d'une plaque maîtresse de transfert (200) selon la revendication 1 ou la revendication 2, dans lequel
les parties en forme de crête et la partie de base sont formées d'un seul tenant, et
les parties en forme de crête présentent une composition dans laquelle des proportions d'une liaison carbonyle et d'une liaison carbone-carbone contenues dans la résine durcissable par rayonnement ionisant (203A) sont inférieures aux proportions de la partie de base.

4. Procédé de fabrication d'une plaque maîtresse de transfert (200) selon la revendication 3, dans lequel les parties en forme de crête présentent une composition dans laquelle les proportions de la liaison carbonyle et de la liaison carbone-carbone contenues dans la résine durcissable par rayonnement ionisant (203A) sont inférieures de 10 % ou plus aux proportions de la partie de base.

5. Procédé de fabrication d'une plaque maîtresse de transfert (200) selon l'une quelconque des revendications 1 à 4, dans lequel les parties en forme de crête présentent une densité de réticulation plus élevée qu'une densité de réticulation de la partie de base.

6. Procédé de fabrication d'une plaque maîtresse de transfert (200) selon l'une quelconque des revendications 1 à 5, dans lequel la résine durcissable par rayonnement ionisant (203A) est appliquée à une surface d'un substrat (201).

7. Procédé de fabrication d'une plaque maîtresse de transfert (200) selon l'une quelconque des revendications 1 à 5, dans lequel la résine durcissable par rayonnement ionisant (203A) est appliquée à une surface d'un substrat (201), et
après durcissement de la résine durcissable par rayonnement ionisant (203A), le matériau de base (201) est retiré par pelage.

8. Procédé de fabrication d'une plaque maîtresse de transfert (200), qui est un matériau métallique présentant des formes irrégulières pour plaque maîtresse sur une surface, comprenant :
l'irradiation d'une surface d'une résine durcissable par rayonnement ionisant (203A) appliquée avec un premier rayonnement ionisant présentant une énergie apte à cliver une chaîne polymère de la résine durcissable par rayonnement ionisant pour rétrécir la surface de la résine durcissable par rayonnement ionisant (203A), la formation de formes irrégulières (203B) pour transfert sur la surface de la résine durcissable par rayonnement ionisant, l'irradiation de la résine durcissable par rayonnement ionisant rétrécie (203B) avec un second rayonnement ionisant durcissant la résine durcissable par rayonnement ionisant pour durcir la résine durcissable par rayonnement ionisant, et la formation d'une couche de résine (203) présentant les formes irrégulières (203B) pour transfert sur une surface, dans lequel
la couche de résine (203) présente une partie de base formée de la résine durcissable par rayonnement ionisant et des parties en forme de crête disposées pour faire saillie sous une forme de crête depuis une surface de la partie de base,
et un pas entre des parties en forme de crête adjacentes est ajusté par un angle d'incidence et une longueur d'onde du premier rayonnement ionisant à 50 µm ou moins, dans lequel le premier rayonnement ionisant est un laser excimère et l'angle d'incidence du laser excimère est de 0° ;
la mesure des formes irrégulières (203B) pour transfert formées sur la surface de la couche de résine (203) par un dispositif de mesure de forme tridimensionnelle pour acquérir des données de forme irrégulière indiquant les formes irrégulières pour transfert ; et
la formation des formes irrégulières pour plaque maîtresse correspondant aux formes irrégulières pour transfert sur la surface du matériau métallique sur la base des données de forme irrégulière pour former la plaque maîtresse de transfert (200).

9. Procédé de fabrication d'une feuille décorative (2) comprenant :
l'application d'un matériau en résine sur une surface d'une couche de matériau de base (11) ;
l'utilisation de la plaque maîtresse de transfert (200) formée par le procédé de fabrication d'une plaque maîtresse de transfert (200) selon l'une quelconque des revendications 1 à 8, le transfert des formes irrégulières (203B) pour plaque maîtresse disposées sur la surface de la plaque maîtresse de transfert (200) au matériau en résine ; et
le durcissement du matériau en résine pour former, sur une surface de la couche de matériau de base (11), une première couche de protection de surface (23) dans laquelle des formes irrégulières correspondant aux formes irrégulières pour plaque maîtresse sont formées sur une surface du matériau en résine.
